# EUROPÄISCHE PATENTSCHRIFT

(11) **EP 3 794 932 B1**
(45) Veröffentlichungstag und Bekanntmachung des Hinweises auf die Patenterteilung: **10.09.2025**
(21) Anmeldenummer: 20183653.3
(22) Anmeldetag: 02.07.2020
(51) Int. Cl.: A01D 75/28, A01D 41/127, A01F 12/44, A01F 12/58

(54) **VERSCHWENKVORRICHTUNG ZUR GLEICHMÄSSIGEN VERTEILUNG EINES GUTES AUF EINEM FÖRDER- UND REINIGUNGSORGAN**
PIVOTING DEVICE FOR UNIFORMLY DISTRIBUTING A PRODUCT ON A CONVEYING AND CLEANING ELEMENT
DISPOSITIF PIVOTANT DESTINÉ À LA DISTRIBUTION UNIFORME D'UNE MARCHANDISE SUR UN ORGANE DE TRANSPORT ET DE NETTOYAGE

(30) Priorität: 23.09.2019 DE 102019125489
(43) Veröffentlichungstag der Anmeldung: 24.03.2021
(73) Patentinhaber: CLAAS Selbstfahrende Erntemaschinen GmbH, 33428 Harsewinkel (DE)
(72) Erfinder: Pölling, Benedikt, 48653 Coesfeld (DE); Lutterbeck, Dennis, 48291 Telgte (DE); Danatzis, George, 33428 Harsewinkel (DE); Strieker, Norbert, 33415 Verl (DE); Kühn, Michael, 48361 Beelen (DE)
(74) Vertreter: CLAAS Gruppe

(56) Entgegenhaltungen:
- EP-A1- 1 609 352
- DE-A1- 102009 000 797
- DE-A1- 3 332 763
- US-A1- 2017 049 057

## Beschreibung

Die vorliegende Erfindung betrifft einen selbstfahrenden Mähdrescher mit einer Verschwenkvorrichtung zur gleichmäßigen Verteilung eines Gutes auf einem hin- und herschwingenden Förder- und Reinigungsorgan, insbesondere einem Obersieb bei Seitenneigung des Mähdreschers, gemäß dem Oberbegriff des Anspruchs 1.

Bei selbstfahrenden Mähdreschern besteht das Problem, dass das Erntegut beim Drusch am Hang die Förder- und Reinigungsorgane einseitig belastet, weil das Erntegut bei der Seitenneigung der Maschine auf eine Seite der Förder- und Reinigungsorgane rutscht. Hierdurch ist der Reinigungseffekt wegen der einseitigen haufenförmigen Ansammlung von Erntegut gering.

Aus der DE 33 32 763 ist eine Vorrichtung zur Lösung dieses Problems bekannt, bei der die Schwingrichtung des Obersiebs und somit auch die Förderrichtung des Ernteguts in Abhängigkeit von der Schräglage eines Mähdreschers beim Drusch am Seitenhang verändert wird, um eine gleichmäßige Verteilung des Ernteguts auf dem Obersieb zu erreichen. Hierzu greifen an dem Obersieb Halter an, die durch Schlitze in der Mähdrescherseitenwand nach außen ragen und an Tragstücken drehbar befestigt sind. Die Tragstücke sind mit Schwenkhebeln fest verbunden. Die Schwenkhebel sind ihrerseits mit Konsolen schwenkbar an der Mähdrescherseitenwand gelagert. Weiterhin greift an einen Schwenkhebel eine Koppelstange an, die mit einem Behälter verbunden ist. Der Behälter wird in seinem oberen Bereich beweglich von der Mähdrescherseitenwand über einen Tragarm gehalten und andererseits mit einer an der Mähdrescherseitenwand angreifenden Kolbenzylindereinheit verschwenkt, wobei die Kolbenzylindereinheit über ein mit dem Behälter fest verbundenes Steuerventil, das von dem im Behälter aufgehängten Pendel betätigbar ist, mit Drucköl beaufschlagt wird. Neigt sich am Hang der Mähdrescher, so neigt sich der Behälter ebenfalls. Da sich das Pendel aber stets senkrecht stellt, ändert sich die Lage des Behälters gegenüber dem Pendel, wodurch das Pendel das Steuerventil aktiviert und die Kolbenzylindereinheit mit Drucköl beaufschlagt wird. Beim aus- bzw. einfahren der Kolbenstange, wird der Behälter verschwenkt, wodurch über die Koppelstange die Winkelstellung der Schwenkhebel und somit auch die Schwingrichtung des Obersiebs, insbesondere die Größe der seitlichen Bewegungskomponente, verändert wird.

Ein selbstfahrender Mähdrescher geht ebenfalls aus der EP 1 609 352 A1 hervor.

Der Erfindung liegt das Problem zugrunde, dass die Vorrichtung mit dem Behälter sowie dem mit diesem und der Mähdrescherseitenwand verbundenen Kolbenzylindereinheit viel Bauraum beansprucht. Weiterhin ist die mechanische Konstruktion kostenintensiv und die mechanische Aktivierung des Steuerventils über das Pendel schränkt die Abhängigkeit der Schwingrichtung des Obersiebs auf die Schräglage des Mähdreschers ein. Nachteilig ist ebenfalls, dass ein Montieren oder Nachrüsten der Vorrichtung auf Grund der vielen Komponenten die am Mähdrescher anzuordnen sind mit einem hohen zeitlichen Aufwand verbunden ist. Die genannten Probleme werden bei einem Mähdrescher nach dem Oberbegriff des Anspruchs 1 durch die Merkmale des kennzeichnenden Teils von Anspruch 1 gelöst.

Gemäß dem Anspruch 1 wird ein selbstfahrender Mähdrescher mit zumindest einer Verschwenkvorrichtung zur gleichmäßigen Verteilung eines Ernteguts auf einem hin- und herschwingenden Förder- und Reinigungsorgan, insbesondere einem Obersieb, vorgeschlagen, wobei die Verschwenkvorrichtung Elemente zum Definieren einer Schwingrichtung des Förder- und Reinigungsorgans umfasst, welche zwischen dem Förder- und Reinigungsorgan und einem Maschinengehäuse, angeordnet sind, wobei die Verschwenkvorrichtung einen Aktor zum stufenlosen Verstellen zumindest eines Bauteils der Elemente von einer Ausgangsposition in eine Verstellposition umfasst, wobei die Position des zumindest einen Bauteils die Schwingrichtung maßgeblich definiert. Erfindungsgemäß ist eine elektrische Steuereinheit vorgesehen, welche in Abhängigkeit zumindest eines Zustands des Mähdreschers und/oder Ernteguts und der Ausgangsposition des zumindest einen Bauteils der Verschwenkvorrichtung den Aktor direkt oder indirekt ansteuert. Die elektrische Steuereinheit ist gegenüber einer mechanischen Ansteuerung des Aktors kostengünstiger und benötigt deutlich weniger Bauraum. Weiterhin können eine Mehrzahl an Kennlinien in der elektrischen Steuereinheit hinterlegt werden, die neben einer Seitenneigung des Mähdreschers weitere Zustände für die Ansteuerung des Aktors berücksichtigen, mit dem Ziel eine gleichmäßigere Verteilung auf dem Förder- und Reinigungsorgan zu erreichen. Solche Zustände können beispielsweise die Längsneigung des Mähdreschers, die Feuchtigkeit des Ernteguts, die Fruchtart aus der sich das Erntegut zusammensetzt oder die Signale eines Durchsatzkontrollgeräts sein.

In einer vorteilhaften Ausgestaltung entspricht die Ausgangsposition einer Ist-Position des zumindest einen Bauteils und die Verstellposition entspricht einer Zielposition des zumindest einen Bauteils, wobei die elektrische Steuereinheit die Verstellposition ermittelt und den Aktor zum Verfahren des zumindest einen Bauteils in die Verstellposition direkt oder indirekt ansteuert.

Insbesondere kann der zumindest eine Zustand des Mähdreschers und/oder Ernteguts die Seitenneigung des Mähdreschers sein, da die Seitenneigung des Mähdreschers zu einer einseitigen Anhäufung des Ernteguts auf dem Förder- und Reinigungsorgan führen kann, wodurch sich ein verschlechterter Reinigungseffekt des Förder- und Reinigungsorgans ergibt.

In einer vorteilhaften Ausgestaltung ist vorgesehen, dass das Förder- und Reinigungsorgan mittels Schwenkelementen verschwenkbar im Maschinengehäuse aufgehängt ist. Die Schwenkelemente ermöglichen eine pendelnde Lagerung des Förder- und Reinigungsorgans, sodass dieses beispielsweise über eine Kurbel in eine hin- und herschwingende Bewegung versetzt werden kann.

Insbesondere können die Elemente der Verschwenkvorrichtung zumindest einen Halter, eine Schwenkstange, eine Schwenkgabel sowie eine Haltevorrichtung umfassen, wobei der Halter an einem Ende seitlich am Förder- und Reinigungsorgan ortsfest angeordnet ist und durch Schlitze seitlich am Maschinengehäuse nach außen ragt, wobei der Halter an seinem freien Ende drehbar an einem Ende der Schwenkstange verbunden ist, wobei die Schwenkstange drehbar an dem zumindest einen Bauteil, welches die Schwenkgabel ist, angeordnet ist, wobei die Schwenkgabel verschwenkbar um eine Schwenkachse am Maschinengehäuse mittels einer Haltevorrichtung angeordnet ist. Dieser Aufbau ermöglicht in Abhängigkeit von der Position der Schwenkgabel eine Änderung der Schwingrichtung, insbesondere der Größe einer seitlichen Bewegungskomponente, des Förder- und Reinigungsorgans. Weiterhin wird durch den Aufbau erreicht, dass die zur Änderung der Schwingrichtung erforderlichen Mittel außerhalb des Maschinengehäuses angeordnet sind, so dass wenig Bauraum innerhalb des Maschinengehäuses verloren geht. Die Anordnung der Komponenten an einer Haltevorrichtung ermöglicht das Erstellen einer vormontierten Baugruppe, mittels der ein schnelles und einfaches Montieren sowie Nachrüsten der Verschwenkvorrichtung am Maschinengehäuse durchführbar ist. Hierfür kann ein Anordnen von weiteren Komponenten, wie beispielsweise Sensoren und/oder Aktoren an der Haltevorrichtung vorgesehen sein.

In einer vorteilhaften Ausgestaltung kann der Aktor zumindest annähernd parallel zu dem zumindest einen Bauteil angeordnet sein. Hierdurch wird der benötigte Bauraum weiter reduziert und eine kompaktere Anordnung der Komponenten erreicht. Die kompaktere Anordnung bietet den Vorteil, dass mehr Bauraum für andere Bauteile des Mähdreschers, wie beispielsweise den Reifen, geschaffen wird.

Bevorzugt kann der Aktor als Kolbenzylindereinheit ausgebildet sein, um ein einfaches Verschwenken der Schwenkgabel um die Schwenkachse zu ermöglichen.

In einer bevorzugten Ausführungsform kann ein Zylinder der Kolbenzylindereinheit, welche sich üblicherweise aus einem Zylinder und einer Kolbenstange zusammensetzt, auf der Kolbenstange zugewandten Seite mittels eines Befestigungselements mit der Schwenkgabel drehbeweglich verbunden sein, wobei die Kolbenstange der Kolbenzylindereinheit mit der Haltevorrichtung drehbeweglich verbunden ist.

Hierdurch wird die zuvor genannte, annähernd parallele Anordnung des Aktors zu der Schwenkgabel ermöglicht. Insbesondere ergibt sich durch die drehbewegliche Verbindung des Befestigungselements mit dem Zylinder an der Kolbenstange zugewandten Seite des Zylinders ein erweiterter Verschwenkbereich der Schwenkgabel.

Eine vorteilhafte Weiterbildung sieht vor, dass ein Positionssensor derart zwischen dem Maschinengehäuse und dem zumindest einen Bauteil, vorzugsweise der Schwenkgabel, angeordnet ist, sodass dieser ein Messsignal zur Bestimmung der Position des zumindest einen Bauteils relativ zu dem Maschinengehäuse, insbesondere einen Winkel zwischen dem Maschinengehäuse und dem zumindest einen Bauteil um die Schwenkachse, erfasst. Die Position des zumindest einen Bauteils relativ zum Maschinengehäuse ist zur direkten oder indirekten Ansteuerung des Aktors erforderlich.

Weiterhin ist vorgesehen, dass der Mähdrescher einen Neigungssensor aufweist, der die Seitenneigung des Mähdreschers erfasst, da die Seitenneigung als Zustand zur direkten oder indirekten Ansteuerung des Aktors erforderlich sein kann.

In einer vorteilhaften Ausgestaltung kann die Verschwenkvorrichtung eine Nullstellung aufweisen, wobei zumindest ein erstes Positionselement, vorzugsweise ein Anschlag, an der Haltevorrichtung vorgesehen sein kann, welches eine Oberfläche zum aufspannen einer Ebene aufweist, wobei die Ebene ein definiertes zweites Positionselement, vorzugsweise einen Bolzen, welches auf dem zumindest einen Bauteil, vorzugsweise der Schwenkgabel, angeordnet ist, in der Nullstellung der Verschwenkvorrichtung tangiert. Der zugrundeliegende Zweck des ersten und zweiten Positionselements ist eine einfache Justierung der Verschwenkvorrichtung in die Nullstellung. Hierfür ist bei dieser vorteilhaften Ausgestaltung lediglich ein Objekt mit einer ebenen Oberfläche, beispielsweise ein Lineal, erforderlich. In einer Stellung der Verschwenkvorrichtung, in der das Objekt eben an der Oberfläche des ersten Positionselements anliegt und gleichzeitig das zweite Positionselement tangiert, befindet sich die Nullstellung der Verschwenkvorrichtung. Eine Anordnung, in der sich das erste Positionselement auf dem zumindest einen Bauteil und das zweite Positionselement auf der Haltevorrichtung, oder einem Bauelement, welches gegenüber dem zumindest einen Bauteil ortsfest an der Rahmenstruktur des Mähdreschers befestigt ist, bildet eine mögliche Alternative.

Vorteilhaft ist es, wenn die Verschwenkvorrichtung derart ausgestaltet ist, dass in ihrer Nullstellung der Einfluss der Verschwenkvorrichtung auf die Schwingrichtung des Förder- und Reinigungsorgans ein Minimum annimmt. Die Nullstellung ist für einen Erntevorgang bei ebenen Unterboden vorgesehen, bei der die hin- und herschwingende Bewegung des Förder- und Reinigungsorgans in einem unveränderten Zustand für eine gleichmäßige Verteilung des Ernteguts ausreicht.

In einer weiteren Ausgestaltung der Erfindung wird vorgeschlagen, dass der Aktor als hydraulische Kolbenzylindereinheit ausgeführt ist, wobei die hydraulische Kolbenzylindereinheit über ein Steuerventil mit Drucköl beaufschlagt wird, wobei die elektrische Steuereinheit das Steuerventil ansteuert. Vorteilhaft an der Verwendung einer hydraulischen Kolbenzylindereinheit ist, dass diese an ein im Mähdrescher vorhandenes Hydrauliksystems angeschlossen werden können. Weiterhin erreichen hydraulische Kolbenzylindereinheiten hohe Zug- und Druckkräfte.

In einer weiteren Ausgestaltung der Erfindung wird vorgeschlagen, dass die hydraulische Kolbenzylindereinheit in zumindest einer Endlage einen Durchfluss zwischen einer ersten und einer zweiten Hydraulikleitung bilden kann. Ein Verfahren der hydraulischen Kolbenzylindereinheit in eine derartige Endlage, kann zum vereinfachten Entlüften dienen, da bei einer entsprechenden Anordnung beim durchfließen der hydraulischen Kolbenzylindereinheit mit Drucköl die vorhandene Luft aus der hydraulischen Kolbenzylindereinheit abgeleitet wird. Ein solcher Vorgang könnte beispielsweise automatisch in definierten Zeitabständen oder durch eine manuelle Aktivierung eingeleitet werden. Ein solcher automatischer Entlüftungsvorgang führt zu einem reduzierten Zeitaufwand für Wartungsarbeiten und erleichtert die Inbetriebnahme der Verschwenkvorrichtung.

In einer weiteren Ausgestaltung der Erfindung wird vorgeschlagen, dass der Aktor als elektrische Verstelleinrichtung, insbesondere als Elektrohubzylinder, ausgeführt sein kann. Dies vereinfacht die Installation des Aktors, da eine elektrische Verstelleinrichtung lediglich leicht verlegbare Stromleitungen benötigt. Weiterhin entfällt die Notwendigkeit eines Steuerventils, sodass der Aktor direkt von der elektrischen Steuereinheit angesteuert werden kann.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Fig. 1: eine schematische Seitenansicht einer als Mähdrescher ausgeführten selbstfahrenden Erntemaschine;
- Fig. 2: eine Seitenansicht der Verschwenkvorrichtung, welche an einem ersten Siebkasten, welcher das Obersieb eines Mähdreschers haltert, angeordnet ist sowie eine Seitenansicht eines zweiten Siebkastens, welcher das Untersieb eines Mähdreschers haltert und einen Ausszug A, welcher die mit einer Haltevorrichtung am Maschinengehäuse des Mähdreschers angeordnete Verschwenkvorrichtung zeigt,
- Fig. 3a: eine Draufsicht einer Verschwenkvorrichtung zum Verändern der Schwingrichtung;
- Fig. 3b: eine Seitenansicht der Verschwenkvorrichtung;
- Fig. 4: einen Schaltplan zum Ansteuern der Kolbenzylindereinheit;
- Fig. 5a: eine schematische Ansicht der Verschwenkvorrichtung mit eingefahrener Kolbenzylindereinheit;
- Fig. 5b: eine schematische Ansicht der Verschwenkvorrichtung mit ausgefahrener Kolbenzylindereinheit.

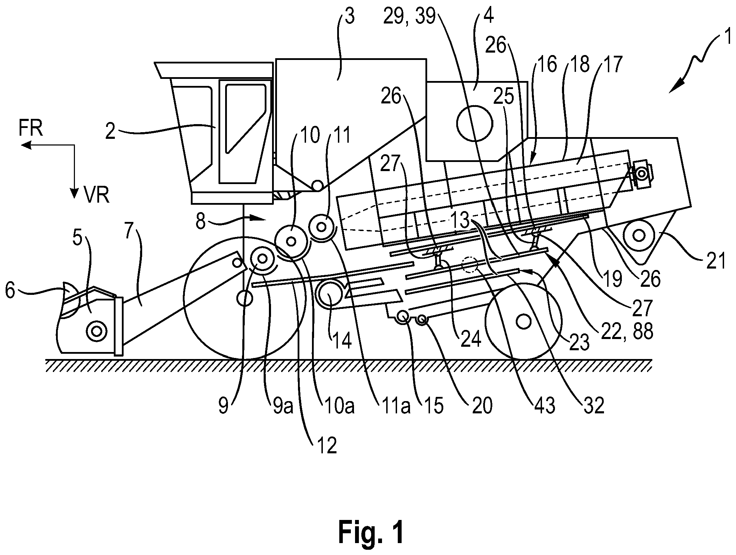

In Fig. 1 ist eine als selbstfahrender Mähdrescher 1 ausgeführte Erntemaschine dargestellt, die eine Fahrerkabine 2, einen hinter dieser liegenden Korntank 3 sowie anschließend an diesen einen Verbrennungsmotor 4 aufweist. Weiterhin nimmt der selbstfahrende Mähdrescher 1 in seinem Frontbereich einen Erntevorsatz 5 auf. Der Erntevorsatz 5 erfasst das zu erntende Halmgut (nicht dargestellt) mit einer Haspel 6 und schneidet es mittels einer nicht dargestellten Mähvorrichtung bodennah ab, woraufhin das Erntegut aus dem Erntevorsatz 5 durch einen Schrägförderer 7 einer Dresch- und Trenneinrichtung 8 zugeführt wird. Diese Dresch- und Trenneinrichtung 8 ist als Mehrtrommelanordnung eines Tangentialdreschwerks ausgebildet und besteht aus einer Vorbeschleunigungstrommel 9, einer Dreschtrommel 10 und einer Zuführtrommel 11. Diesen Trommeln 9, 10 und 11 sind jeweils Abscheidekörbe 9a, 10a und 11a zugeordnet. Das ausgedroschene Erntegut gelangt durch die Abscheidekörbe 9a, 10a und 11a auf einen Vorbereitungsboden 12, über welchen es schwingend bewegten Sieben, die ein noch näher zu beschreibendes Förder- und Reinigungsorgan 88, welches als Obersieb 22 ausgebildet ist, und ein Untersieb 23 umfassen, einer Reinigungsvorrichtung 13 zugeführt wird. Mit den Sieben der Reinigungsvorrichtung 13 wirkt ein Reinigungsgebläse 14 zusammen, welches im Bereich der Siebe einen Luftstrom erzeugt, wodurch Spreu und Kurzstroh abgeschieden und aus dem Mähdrescher 1 herausbefördert werden. Das durch die Siebe der Reinigungsvorrichtung 13 hindurchtretende gereinigte Erntegut gelangt in eine Querförderschnecke 15, die das Erntegut zu einem mit dem Korntank 3 verbundenen, nicht dargestellten Körnerelevator transportiert.

Sämtliche Anteile des Ernteguts, welches die Abscheidekörbe 9a, 10a und 11a nicht in Richtung des Vorbereitungsbodens 12 passiert und bei dem es sich um Stroh, Kurzstroh, Ähren und gegebenenfalls Grannen handelt, werden mittels der Zuführtrommel 11 einer Einrichtung 16 zur Restkornabscheidung zugeführt. Diese Einrichtung 16 zur Restkornabscheidung weist bei dem in der Fig. 1 dargestellten Mähdrescher 1 ein in Längsrichtung des Mähdreschers 1 verlaufenden Trennrotor 17 auf, in einer alternativen Ausführung kann der Mähdrescher 1 jedoch auch mit Schüttlern ausgestattet sein. Der Trennrotor 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die vorgenannten Öffnungen des Abscheidegehäuses 18 gelangen Restkorn, Spreu, Ähren und eventuell Kurzstroh auf einen Rücklaufboden 19, der diese Bestandteile der Reinigungseinrichtung 13 zuführt. Die Bestandteile dieses Erntegutstromes, die von den Sieben der Reinigungsvorrichtung 13 abgeschieden werden, gelangen in eine Förderschnecke 20, die diese Bestandteile des Ernteguts einer an sich bekannten und daher nicht näher dargestellten Überkehr zuführt. Die Überkehr fördert diese Bestandteile des Ernteguts zurück in die Dresch- und Trenneinrichtung 8. Das durch den Trennrotor 17 geförderte Stroh verlässt diesen an dessen hinterem Ende, wo das Stroh in einen Strohhäcksler 21 gelangt.

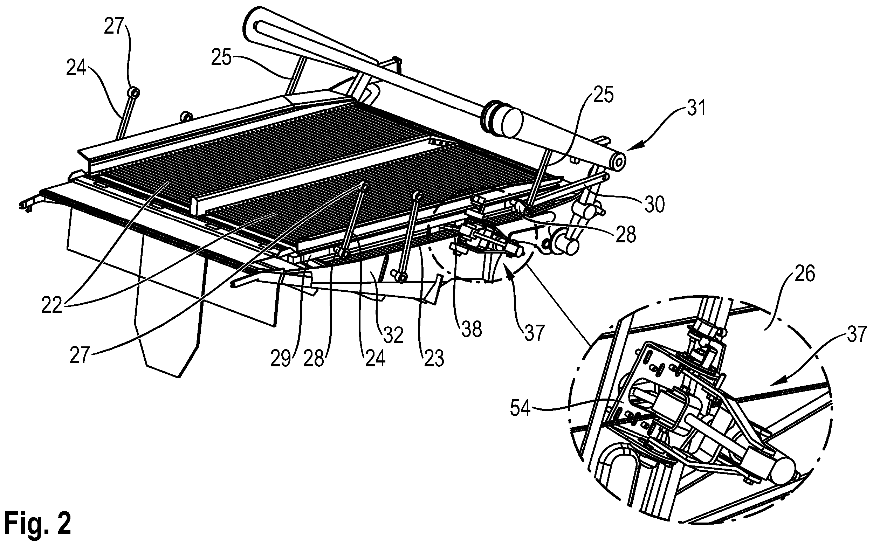

Fig. 2 zeigt einen ersten Siebkasten 29, welcher das Obersieb 22 haltert und einen zweiten Siebkasten 32, welcher das Untersieb 23 haltert. Der erste Siebkasten 29 ist an vorderen Schwenkelementen 24 und hinteren Schwenkelement 25 aufgehangen, die jeweils mit ihren oberen Enden an mit dem Maschinengehäuse 26 gekoppelten Halterungen 27 frei schwenkbar gelagert sind und an ihren unteren Enden ebenfalls mittels Lagerungen 28 frei schwenkbar am ersten Siebkasten 29 gelagert sind. Eine Kurbelstange 30 verbindet den ersten Siebkasten 29 mit einem an sich bekannten und nicht näher erläuterten Exzenterantrieb 31. Mittels des Exzenterantriebs 31 wird das Obersieb 22 zum hin- und herschwingen angeregt. Weiterhin ist in Fig. 2 eine erfindungsgemäße und noch näher zu beschreibende Verschwenkvorrichtung 37 dargestellt, welche einen Halter 38 aufweist, der fest mit dem ersten Siebkasten 29 verbunden ist. Der Auszug A der Fig. 2 zeigt die Verschwenkvorrichtung 37 und einen Ausschnitt des Maschinengehäuses 26, an dem die Verschwenkvorrichtung 37 mittels einer Haltevorrichtung 54 angeordnet ist.

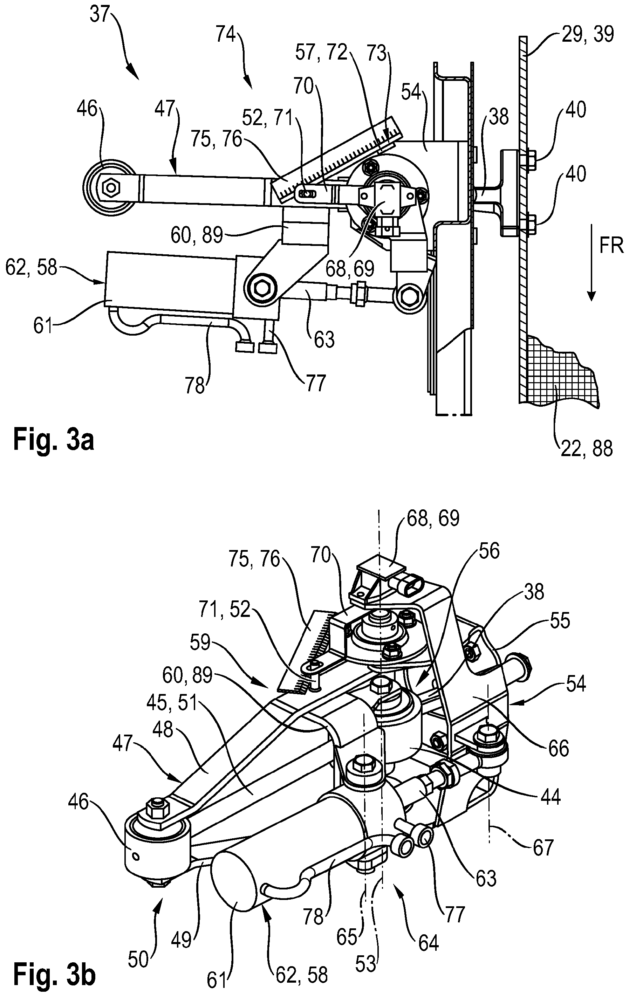

In Fig. 3a ist die erfindungsgemäße Verschwenkvorrichtung 37 in einer Draufsicht mit einem Ausschnitt des Obersiebs 22 sowie ein seitlicher Ausschnitt des Maschinengehäuses 26 dargestellt. Fig. 3b zeigt die Verschwenkvorrichtung 37 in einer Seitenansicht. Der Halter 38 der Verschwenkvorrichtung ist an einem Ende ortsfest mit einer sich im Wesentlichen in Fahrtrichtung FR erstreckenden Längsseite 39 des ersten Siebkastens 29 verbunden, beispielsweise mittels Schrauben 40 verschraubt. Für ein Verschrauben des Halters 38 mit dem ersten Siebkasten 29 können Bohrungen 41, vorzugsweise in einem mittleren Bereich 42 der Längsseite 39 des ersten Siebkastens 29, vorgesehen sein. An dem Maschinengehäuse 26 ist eine erste Schlitzöffnung 43 vorgesehen, durch welche der Halter 38 nach außen ragt.

Im Ausführungsbeispiel ist der Halter 38 an seinem freien Ende drehbeweglich mittels eines ersten Metallgummilagers 44 an einem Ende eines Bauteils 51, welches als Schwenkstange 45 ausgebildet ist, angeordnet. Das erste Metallgummilager 44 erlaubt eine Drehbewegung des Halters 38 gegenüber der Schwenkstange 45 mit im Wesentlichen drei rotatorischen Freiheitsgraden. Die Schwenkstange 45 ist wiederum mit dem freien Ende drehbeweglich mittels eines zweiten Metallgummilagers 46 an einer Schwenkgabel 47 angeordnet.

Die Schwenkgabel 47 weist ein erstes Profilelement 48 und ein zweites Profilelement 49 auf, welche im Wesentlichen V-förmig zueinander angeordnet sind. Auf der spitz zulaufenden Seite 50 ist die Schwenkstange 47 mittels des zweiten Metallgummilagers 46 gelagert. An ihrer freien Seite sind das erste Profilelement 48 und das zweite Profilelement 49 drehbeweglich um eine sich im Wesentlichen in eine vertikale Richtung VR erstreckende Schwenkachse 53 an der Haltevorrichtung 54 angeordnet.

Die Haltevorrichtung 54 weist eine Tragseite 55 mit einer mittig auf dieser befindlichen zweiten Schlitzöffnung 56 auf. Die Tragseite 55 ist derartig ortsfest an dem Maschinengehäuse 26 angeordnet, beispielsweise verschraubt, sodass sich die erste Schlitzöffnung 43 und die zweite Schlitzöffnung 56 überlagern.

An der Schwenkgabel 47 ist in einem mittleren Bereich 59, der sich im Wesentlichen mittig zwischen der spitz zulaufenden Seite 50 der V-förmigen Schwenkgabel 47 und der Haltevorrichtung 54 befindet, ein Befestigungselement 89, welches als U-förmiges Profilelement 60 ausgebildet ist, ortsfest zwischen dem ersten Profilelement 48 und dem zweiten Profilelement 49 angeordnet, beispielsweise verschweißt. An dem U-förmigen Profilelement 60 ist ein Zylinder 61 eines als hydraulische Kolbenzylindereinheit 62 ausgebildeten Aktors 58 auf der Kolbenstange 63 zugewandten Seite 64 drehbeweglich um eine sich parallel zur Schwenkachse 53 erstreckende Achse 65 gelagert. Die hydraulische Kolbenzylindereinheit 62 erstreckt sich im Wesentlichen parallel zu der Schwenkgabel 47. Die Haltevorrichtung 54 weist ein erstes Element 66 auf, welches sich quer zur Tragseite 55 erstreckt. An dem erstes Element 66 ist die Kolbenstange 63 der hydraulischen Kolbenzylindereinheit 62 an ihrem freien Ende drehbeweglich um eine sich parallel zur Schwenkachse 53 erstreckende Drehachse 67 gelagert.

Weiterhin ist an der Haltevorrichtung 54 ein Positionssensor 68 angeordnet, welcher als Winkelpotentiometer 69 ausgebildet ist. Dem Winkelpotentiometer 69 ist ein Messfühler 70 drehbeweglich um die Schwenkachse 53 zugeordnet, der mittels eines an der Schwenkgabel 47 befestigten Bolzens 71 mit der Schwenkgabel 47 in Kontakt steht, sodass er eine Drehbewegung der Schwenkgabel 47 um die Schwenkachse 53 nachvollzieht. Im einfachsten Fall ist der Positionssensor 68 an der Schwenkachse 53 angeordnet, sodass eine einfache Auswertung der Messdaten des Positionssensors 68 möglich ist.

An der Haltevorrichtung 54 ist ein erstes Positionselement 57, welches als Anschlag 72 ausgebildet ist, ortsfest angeordnet, welcher eine ebene Fläche 73 aufweist, die sich parallel zur Schwenkachse 53 erstreckt. Weiterhin ist die ebene Fläche 73 derart ausgebildet, sodass diese eine Ebene (nicht gezeigt) aufspannt, welche in einer Nullstellung 74 der Verschwenkvorrichtung 37 ein zweites Positionselement 52, welches als Bolzen 71 ausgebildet ist, tangiert. Hierdurch wird ein einfaches Justieren der Verschwenkvorrichtung 37 in die Nullstellung 74 ermöglicht. Hierfür ist lediglich ein Objekt 75 mit einer ebenen Oberfläche erforderlich, beispielsweise ein Lineal 76. In der Nullstellung 74 liegt das Objekt 75 mit seiner ebenen Oberfläche eben an der Fläche 73 an und tangiert den Bolzen 71. Der Anschlag 72 kann einteilig mit der Haltevorrichtung 54 ausgeführt sein.

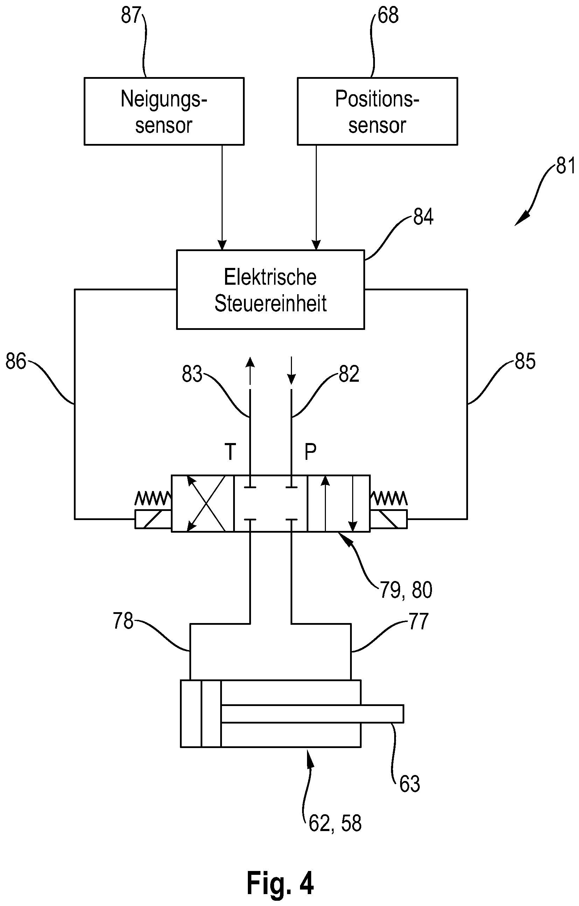

Fig. 4 zeigt einen Schaltplan 81 zum Ansteuern der hydraulischen Kolbenzylindereinheit 62. Die hydraulische Kolbenzylindereinheit 62 kann mittels einer ersten Hydraulikleitung 77 und einer zweiten Hydraulikleitung 78 mit Drucköl beaufschlagt werden. Die erste und zweite Hydraulikleitung 77, 78 sind an ein Steuerventil 79 angeschlossen, welches im Ausführungsbeispiel als 4/3-Wegeventil 80 ausgestaltet ist. Weiterhin wird das Steuerventil 79 mittels einer Pumpleitung 82 mit Drucköl einer in dem Mähdrescher 1 vorhandenen hydraulischen Anlage (nicht gezeigt) beaufschlagt und ist mit einer Tankleitung 83 mit dem Tank dieser Anlage verbunden. Das Steuerventil 79 wird von einer elektrischen Steuereinheit 84 über die Steuerleitungen 85, 86 angesteuert. Die elektrischen Steuereinheit 84 steuert das Steuerventil 79 im Ausführungsbeispiel in Abhängigkeit von den Messergebnissen des Positionssensors 68 und eines Neigungssensors 87 an. Der Neigungssensor 87, welcher üblicherweise bereits im Mähdrescher 1 vorhanden ist, ermittelt die Seitenneigung des Mähdreschers 1. Dementsprechend steuert die elektrische Steuereinheit 84 die Schaltstellungen des Steuerventils 79 derart an, sodass die Kolbenstange 63 der hydraulische Kolbenzylindereinheit 62 ausgefahren, eingefahren oder in ihrer Position gehalten wird. Die Erfindung ist nicht auf die im Ausführungsbeispiel genannten Messergebnissen des Neigungs- und Positionssensors 87, 68 zum Ansteuern des Steuerventils 79 beschränkt, sondern kann durch weitere Kriterien, wie beispielsweise eine Nickbewegung des Mähdreschers 1, die Beschaffenheit des Ernteguts oder Durchsatzmessungen des Ernteguts im Mähdrescher 1 erweitert werden.

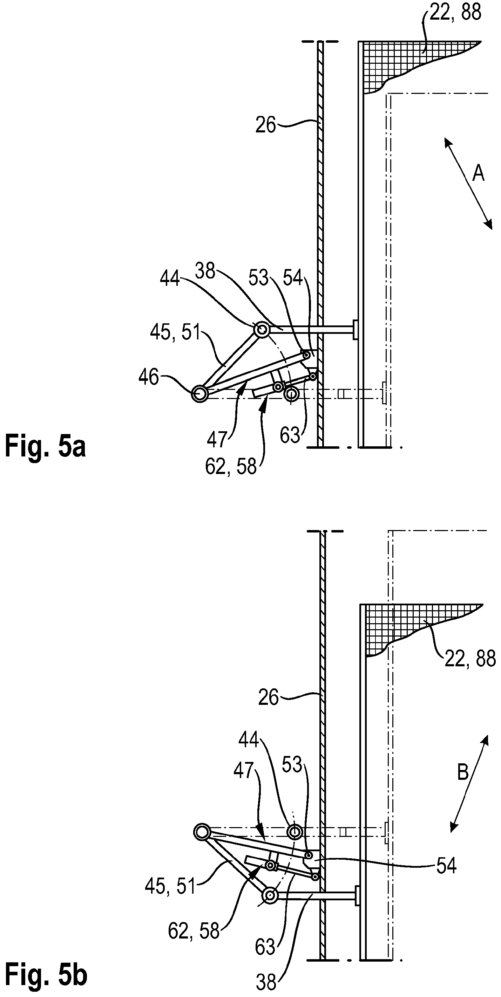

Das Ausfahren oder Einfahren der hydraulischen Kolbenzylindereinheit 62 ändert die Winkellage der Schwenkgabel 47 gegenüber dem Maschinengehäuse 26 um die Schwenkachse 53 und damit die Größe der seitlichen Bewegungskomponente des Obersiebs 22, welches einer Änderung der Schwingrichtung entspricht. Fig. 5a zeigt schematisch eine Stellung der Verschwenkvorrichtung 47 mit eingefahrener Kolbenstange 63 und Fig. 5b mit ausgefahrener Kolbenstange 63. Die sich aus diesen beiden von vielen möglichen Zwischenstellungen ergebene Schwenkbewegung des Obersiebes 22 sind durch die Pfeile A und B angedeutet.

In einer alternativen Ausführungsform kann die hydraulische Kolbenzylindereinheit 62 als eine elektrische Verstelleinrichtung, wie beispielsweise ein Elektrohubzylinder ausgeführt sein. Weiterhin kann als alternative zur Erfassung der Position der Schwenkgabel 47 mittels des Positionssensors 68 eine Positionsmessung am Aktor 58 durchgeführt werden.

**Bezugszeichenliste:**

| | | | |
|---|---|---|---|
| 1 | Mähdrescher | 31 | Exzenterantrieb |
| 2 | Fahrerkabine | 32 | Zweiter Siebkasten |
| 3 | Korntank | | |
| 4 | Verbrennungsmotor | | |
| 5 | Erntevorsatz | | |
| 6 | Haspel | | |
| 7 | Schrägförderer | 37 | Verschwenkvorrichtung |
| 8 | Trenneinrichtung | 38 | Halter |
| 9 | Vorbeschleunigungstrommel | 39 | Längsseite |
| 9a | Abscheidekorb | 40 | Schraube |
| 10 | Dreschtrommel | 41 | Bohrungen |
| 10a | Abscheidekorb | 42 | Mittlere Bereich der Längsseite |
| 11 | Zuführtrommel | 43 | Erste Schlitzöffnung |
| 11a | Abscheidekorb | 44 | Erstes Metallgummilager |
| 12 | Vorbereitungsboden | 45 | Schwenkstange |
| 13 | Reinigungsvorrichtung | 46 | Zweites Metallgummilager |
| 14 | Reinigungsgebläse | 47 | Schwenkgabel |
| 15 | Querförderschnecke | 48 | Erstes Profilelement |
| 16 | Einrichtung zur Restkornabscheidung | 49 | Zweites Profilelement |
| 17 | Trennrotor | 50 | Spitz zulaufende Seite der Schwenkgabel |
| 18 | Abscheidegehäuse | | |
| 19 | Rücklaufboden | 51 | Bauteil |
| 20 | Förderschnecke | 52 | Zweites Positionselement |
| 21 | Strohhäcksler | 53 | Schwenkachse |
| 22 | Obersieb | 54 | Haltevorrichtung |
| 23 | Untersieb | 55 | Tragseite |
| 24 | Vorderes Schwenkelement | 56 | Zweite Schlitzöffnung |
| 25 | Hinteres Schwenkelement | 57 | Erstes Positionselement |
| 26 | Maschinengehäuse | 58 | Aktor |
| 27 | Halterung | 59 | Mittlerer Bereich der Schwenkgabel |
| 28 | Lagerung | 60 | U-förmiges Profilelement |
| 29 | Erster Siebkasten | 61 | Zylinder |
| 30 | Kurbelstange | 62 | Kolbenzylindereinheit |
| 63 | Kolbenstange | 81 | Schaltplan |
| 64 | Kolbenstange zugewandte Seite | 82 | Pumpleitung |
| 65 | Achse | 83 | Tankleitung |
| 66 | Erstes Element | 84 | Elektrische Steuereinheit |
| 67 | Drehachse | 85 | Steuerleitung |
| 68 | Positionssensor | 86 | Steuerleitung |
| 69 | Winkelpotentiometer | 87 | Neigungssensor |
| 70 | Messfühler | 88 | Förder- und Reinigungsorgan |
| 71 | Bolzen | 89 | Befestigungselement |
| 72 | Anschlag | | |
| 73 | Fläche | | |
| 74 | Nullstellung | | |
| 75 | Objekt | | |
| 76 | Lineal | | |
| 77 | Erste Hydraulikleitung | FR | Fahrtrichtung |
| 78 | Zweite Hydraulikleitung | VR | Vertikale Richtung |
| 79 | Steuerventil | | |
| 80 | 4/3-Wegeventil | | |

## Patentansprüche

1. Selbstfahrender Mähdrescher (1) mit zumindest einer Verschwenkvorrichtung (37) zur gleichmäßigen Verteilung eines Ernteguts auf einem hin- und herschwingenden Förder- und Reinigungsorgan (88), insbesondere einem Obersieb (22), wobei die Verschwenkvorrichtung (37) Elemente (38, 45, 47, 54) zum Definieren einer Schwingrichtung des Förder- und Reinigungsorgans (88) umfasst, welche zwischen dem Förder- und Reinigungsorgan (88) und einem Maschinengehäuse (26), angeordnet sind, wobei die Verschwenkvorrichtung (37) einen Aktor (58) zum stufenlosen Verstellen zumindest eines Bauteils (51) der Elemente (38, 45, 47, 54) von einer Ausgangsposition in eine Verstellposition umfasst, wobei die Position des zumindest einen Bauteils (51) die Schwingrichtung maßgeblich definiert, **dadurch gekennzeichnet, dass**
eine elektrische Steuereinheit (84) vorgesehen ist, welche in Abhängigkeit zumindest eines Zustands des Mähdreschers (1) und/oder Ernteguts und zumindest der Ausgangsposition des zumindest einen Bauteils (51) der Verschwenkvorrichtung (37) den Aktor (58) direkt oder indirekt ansteuert, wobei die Ausgangsposition einer Ist-Position des zumindest einen Bauteils (51) entspricht, wobei der zumindest eine Zustand des Mähdreschers (1) und/oder Ernteguts die Seitenneigung des Mähdreschers (1) ist, wobei ein Positionssensor (68) derart zwischen dem Maschinengehäuse (26) und dem zumindest einen Bauteil (51), vorzugsweise der Schwenkgabel (47), angeordnet ist, sodass dieser ein Messsignal zur Bestimmung der Position des zumindest einen Bauteils (51) relativ zu dem Maschinengehäuse (26), insbesondere einen Winkel zwischen dem Maschinengehäuse (26) und dem zumindest einen Bauteil (51) um die Schwenkachse (53), erfasst.

2. Selbstfahrender Mähdrescher nach Anspruch 1, **dadurch gekennzeichnet, dass** die Verstellposition einer Zielposition des zumindest einen Bauteils (51) entspricht, wobei die elektrische Steuereinheit (84) die Verstellposition ermittelt und den Aktor (58) zum Verfahren des zumindest einen Bauteils (51) in die Verstellposition direkt oder indirekt ansteuert.

3. Selbstfahrender Mähdrescher (1) nach einem der Ansprüche 1 bis 2, **dadurch**
**gekennzeichnet, dass** das Förder- und Reinigungsorgan (88) mittels Schwenkelementen (24, 25) verschwenkbar im Maschinengehäuse (26) aufgehängt ist.

4. Selbstfahrender Mähdrescher (1) nach einem der Ansprüche 1 bis 3, **dadurch gekennzeichnet, dass** die Elemente (38, 45, 47, 54) der Verschwenkvorrichtung (37) zumindest einen Halter (38), eine Schwenkstange (45), eine Schwenkgabel (47) sowie eine Haltevorrichtung (54) umfassen,
wobei der Halter (38) an einem Ende seitlich am Förder- und Reinigungsorgan (88) ortsfest angeordnet ist und durch Schlitze seitlich am Maschinengehäuse (26) nach außen ragt,
wobei der Halter (38) an seinem freien Ende drehbar an einem Ende der Schwenkstange (45) verbunden ist,
wobei die Schwenkstange (45) drehbar an dem zumindest einen Bauteil (51), welches die Schwenkgabel (47) ist, angeordnet ist,
wobei die Schwenkgabel (47) verschwenkbar um eine Schwenkachse (53) am Maschinengehäuse (26) mittels einer Haltevorrichtung (54) angeordnet ist.

5. Selbstfahrender Mähdrescher (1) nach einem der Ansprüche 1 bis 4, **dadurch**
**gekennzeichnet, dass** der Aktor (58) zumindest annähernd parallel zu dem zumindest einen Bauteil (51) angeordnet ist.

6. Selbstfahrender Mähdrescher (1) nach einem der Ansprüche 1 bis 5, **dadurch**
**gekennzeichnet, dass** der Mähdrescher (1) einen Neigungssensor aufweist, der die Seitenneigung des Mähdreschers (1) erfasst.

7. Selbstfahrender Mähdrescher (1) nach einem der Ansprüche 1 bis 6, **dadurch gekennzeichnet, dass** die Verschwenkvorrichtung (37) eine Nullstellung (74) aufweist,
wobei zumindest ein erstes Positionselement (57) an der Haltevorrichtung (54) vorgesehen ist, welches eine Oberfläche zum aufspannen einer Ebene aufweist, wobei die Ebene ein definiertes zweites Positionselement (52), vorzugsweise einen Bolzen (71), welches auf dem zumindest einen Bauteil (51), vorzugsweise der Schwenkgabel (47), angeordnet ist, in der Nullstellung (74) der Verschwenkvorrichtung (37) tangiert.

8. Selbstfahrender Mähdrescher (1) nach Anspruch 7, **dadurch gekennzeichnet, dass** die Verschwenkvorrichtung (37) derart ausgestaltet ist, dass in ihrer Nullstellung (74) der Einfluss der Verschwenkvorrichtung (37) auf die Schwingrichtung des Förder- und Reinigungsorgans (88) ein Minimum annimmt.

9. Selbstfahrender Mähdrescher (1) nach einem der Ansprüche 1 bis 8, **dadurch gekennzeichnet, dass** der Aktor (58) als Kolbenzylindereinheit (62) ausgebildet ist.

10. Selbstfahrender Mähdrescher (1) nach Anspruch 9, **dadurch gekennzeichnet, dass** die Kolbenzylindereinheit (62) einen Zylinder (61) und eine Kolbenstange (63) umfasst, wobei der Zylinder (61) der Kolbenzylindereinheit (62) auf der der Kolbenstange (63) zugewandten Seite mittels eines Befestigungselements (89) mit der Schwenkgabel (47) drehbeweglich verbunden ist, wobei die Kolbenstange (63) der Kolbenzylindereinheit (62) mit der Haltevorrichtung (54) drehbeweglich verbunden ist.

11. Selbstfahrender Mähdrescher (1) nach einem der Ansprüche 9 bis 10, **dadurch gekennzeichnet, dass** der Aktor (58) als hydraulische Kolbenzylindereinheit (62) ausgeführt ist, wobei die hydraulische Kolbenzylindereinheit (62) über ein Steuerventil (79) mit Drucköl beaufschlagt wird, wobei die elektrische Steuereinheit (83) das Steuerventil (79) ansteuert.

12. Selbstfahrender Mähdrescher (1) nach Anspruch 11, **dadurch gekennzeichnet, dass** die hydraulische Kolbenzylindereinheit (62) in zumindest einer Endlage einen Durchfluss zwischen einer ersten und einer zweiten Hydraulikleitung (77, 78) bildet.

13. Selbstfahrender Mähdrescher nach einem der Ansprüche 1 bis 8, **dadurch**
**gekennzeichnet, dass** der Aktor (58) als elektrische Verstelleinrichtung, insbesondere als Elektrohubzylinder, ausgeführt ist.

## Claims

1. A self-propelled combine harvester (1) with at least one pivoting device (37) for uniformly distributing a harvested material on a conveying and cleaning means (88) which oscillates back and forth, in particular an upper sieve (22), wherein the pivoting device (37) comprises elements (38, 45, 47, 54) for defining a direction of pivoting of the conveying and cleaning means (88), which elements are disposed between the conveying and cleaning means (88) and a machine housing (26), wherein the pivoting device (37) comprises an actuator (58) for the continuous adjustment of at least one component (51) of the elements (38, 45, 47, 54) from a starting position into an adjusted position, wherein the position of the at least one component (51) substantially defines the direction of pivoting,
**characterized in that**
an electrical control unit (84) is provided which directly or indirectly controls the actuator (58) as a function of at least one state of the combine harvester (1) and/or harvested material and at least the starting position of the at least one component (51) of the pivoting device (37), wherein the starting position corresponds to an actual position of the at least one component (51), wherein the at least one state of the combine harvester (1) and/or harvested material is the lateral inclination of the combine harvester (1), wherein a position sensor (68) is disposed between the machine housing (26) and the at least one component (51), preferably the pivot fork (47), in a manner such that it detects a measurement signal for determining the position of the at least one component (51) relative to the machine housing (26), in particular an angle between the machine housing (26) and the at least one component (51) about the pivot axis (53).

2. The self-propelled combine harvester according to claim 1, **characterized in that** the adjusted position corresponds to a target position of the at least one component (51), wherein the electrical control unit (84) determines the adjusted position and directly or indirectly controls the actuator (58) in order to move the at least one component (51) into the adjusted position.

3. The self-propelled combine harvester (1) according to one of claims 1 to 2, **characterized in that** the conveying and cleaning means (88) is pivotably suspended in the machine housing (26) by means of pivot elements (24, 25).

4. The self-propelled combine harvester (1) according to one of claims 1 to 3, **characterized in that** the elements (38, 45, 47, 54) of the pivoting device (37) comprise at least one retainer (38), a pivot rod (45), a pivot fork (47) as well as a retaining device (54),
wherein one end of the retainer (38) is disposed laterally on the conveying and cleaning means (88) in an immovable manner and protrudes laterally outwards through slots on the machine housing (26),
wherein the free end of the retainer (38) is rotatably connected to one end of the pivot rod (45),
wherein the pivot rod (45) is rotatably disposed on the at least one component (51) which is the pivot fork (47),
wherein the pivot fork (47) is pivotably disposed about a pivot axis (53) on the machine housing (26) by means of a retaining device (54).

5. The self-propelled combine harvester (1) according to one of claims 1 to 4, **characterized in that** the actuator (58) is disposed at least approximately parallel to the at least one component (51).

6. The self-propelled combine harvester (1) according to one of claims 1 to 5, **characterized in that** the combine harvester (1) has an inclination sensor which detects the lateral inclination of the combine harvester (1).

7. The self-propelled combine harvester (1) according to one of claims 1 to 6, **characterized in that** the pivoting device (37) has a neutral position (74), wherein at least a first positioning element (57) is provided on the retaining device (54) which has a surface for defining a plane, wherein, in the neutral position (74) of the pivoting device (37), the plane is tangential to a defined second positioning element (52), preferably a pin (71), which is disposed on the at least one component (51), preferably the pivot fork (47).

8. The self-propelled combine harvester (1) according to claim 7, **characterized in that** the pivoting device (37) is constructed in a manner such that in its neutral position (74), the influence of the pivoting device (37) on the direction of pivoting of the conveying and cleaning means (88) assumes a minimum.

9. The self-propelled combine harvester (1) according to one of claims 1 to 8, **characterized in that** the actuator (58) is configured as a piston and cylinder unit (62).

10. The self-propelled combine harvester (1) according to claim 9, **characterized in that** the piston and cylinder unit (62) comprises a cylinder (61) and a piston rod (63), wherein, on the side facing the piston rod (63), the cylinder (61) of the piston and cylinder unit (62) is connected to the pivot fork (47) in a rotatably movable manner by means of a fastening element (89), wherein the piston rod (63) of the piston and cylinder unit (62) is connected to the retaining device (54) in a rotatably movable manner.

11. The self-propelled combine harvester (1) according to one of claims 9 to 10, **characterized in that** the actuator (58) is configured as a hydraulic piston and cylinder unit (62), wherein the hydraulic piston and cylinder unit (62) is pressurized with oil via a control valve (79), wherein the electrical control unit (83) controls the control valve (79).

12. The self-propelled combine harvester (1) according to claim 11, **characterized in that** in at least one end position, the hydraulic piston and cylinder unit (62) forms a throughflow passage between a first and a second hydraulic line (77, 78).

13. The self-propelled combine harvester according to one of claims 1 to 8, **characterized in that** the actuator (58) is configured as an electrical adjusting device, in particular as an electric lifting cylinder.

## Revendications

1. Moissonneuse-batteuse (1) automotrice comprenant au moins un dispositif pivotant (37) destiné à la répartition uniforme d'un produit récolté sur un organe de transport et de nettoyage (88) effectuant des oscillations de va-et-vient, notamment une grille supérieure (22), le dispositif pivotant (37) comportant des éléments (38, 45, 47, 54) qui sont destinés à définir un sens d'oscillation de l'organe de transport et de nettoyage (88) et sont placés entre l'organe de transport et de nettoyage (88) et un carter de machine (26), le dispositif pivotant (37) comportant un actionneur (58) destiné au réglage continu d'au moins un composant (51) des éléments (38, 45, 47, 54) depuis une position initiale jusqu'à une position de réglage, la position du composant (51), au nombre d'au moins un, définissant de manière déterminante le sens d'oscillation, **caractérisée en ce que**
il est prévu une unité de commande (84) électrique qui, en fonction d'au moins un état de la moissonneuse-batteuse (1) et/ou du produit récolté, et d'au moins la position initiale du composant (51), au nombre d'au moins un, du dispositif pivotant (37), active l'actionneur (58) directement ou indirectement, la position initiale correspondant à une position réelle du composant (51), au nombre d'au moins un, l'état, au nombre d'au moins un, de la moissonneuse-batteuse (1) et/ou du produit récolté étant l'inclinaison latérale de la moissonneuse-batteuse (1), un capteur de position (68) étant disposé entre le carter de machine (26) et le composant (51), au nombre d'au moins un, de préférence la fourche pivotante (47), de manière à ce que celui-ci recueille un signal de mesure pour déterminer la position du composant (51), au nombre d'au moins un, par rapport au carter de machine (26), notamment un angle entre le carter de machine (26) et le composant (51), au nombre d'au moins un, autour de l'axe de pivotement (53).

2. Moissonneuse-batteuse (1) automotrice selon la revendication 1, **caractérisée en ce que** la position de réglage correspond à une position cible du composant (51), au nombre d'au moins un, l'unité de commande (84) électrique déterminant la position de réglage et activant directement ou indirectement l'actionneur (58) aux fins de déplacer le composant (51), au nombre d'au moins un, dans la position de réglage.

3. Moissonneuse-batteuse (1) automotrice selon une des revendications 1 à 2, **caractérisée en ce que** l'organe de transport et de nettoyage (88) est suspendu dans le carter de machine (26) avec possibilité de pivotement, à l'aide d'éléments de pivotement (24, 25).

4. Moissonneuse-batteuse (1) automotrice selon une des revendications 1 à 3, **caractérisée en ce que** les éléments (38, 45, 47, 54) du dispositif pivotant (37) comprennent au moins un support (38), une barre de pivotement (45), une fourche de pivotement (47) et un dispositif de maintien (54),
le support (38) étant disposé de manière stationnaire avec une extrémité sur le côté de l'organe de transport et de nettoyage (88), et s'étendant vers l'extérieur latéralement sur le carter de machine (26), à travers des fentes,
le support (38) étant relié par son extrémité libre avec possibilité de rotation à une extrémité de la barre de pivotement (45),
la barre de pivotement (47) étant disposée avec possibilité de rotation sur le composant (51), au nombre d'au moins un, qui est la fourche de pivotement (47),
la fourche de pivotement (47) étant disposée avec possibilité de pivotement autour d'un axe de pivotement (53) sur le carter de machine (26), à l'aide d'un dispositif de maintien (54).

5. Moissonneuse-batteuse (1) automotrice selon une des revendications 1 à 4, **caractérisée en ce que** l'actionneur (58) est disposé de façon au moins approximativement parallèle au composant (51), au nombre d'au moins un.

6. Moissonneuse-batteuse (1) automotrice selon une des revendications 1 à 5, **caractérisée en ce que** la moissonneuse-batteuse (1) présente un capteur d'inclinaison qui détecte l'inclinaison latérale de la moissonneuse-batteuse (1).

7. Moissonneuse-batteuse (1) automotrice selon une des revendications 1 à 6, **caractérisée en ce que** le dispositif pivotant (37) présente une position zéro (74), sachant qu'au moins un premier élément de position (57) est prévu sur le dispositif de maintien (54) et présente une surface pour définir un plan, ledit plan étant tangent à un deuxième élément de position (52) défini, de préférence un goujon (71), qui est disposé sur le composant (51), au nombre d'au moins un, de préférence la fourche de pivotement (47), lorsque le dispositif pivotant (37) est dans la position zéro (74).

8. Moissonneuse-batteuse (1) automotrice selon la revendication 7, **caractérisée en ce que** le dispositif pivotant (37) est agencé de manière à ce que dans sa position zéro (74), l'influence du dispositif pivotant (37) sur le sens d'oscillation de l'organe de transport et de nettoyage (88) est minimale.

9. Moissonneuse-batteuse (1) automotrice selon une des revendications 1 à 8, **caractérisée en ce que** l'actionneur (58) est réalisé sous la forme d'unité piston-cylindre (82).

10. Moissonneuse-batteuse (1) automotrice selon la revendication 9, **caractérisée en ce que** l'unité piston-cylindre (62) comprend un cylindre (61) et une tige de piston (63), le cylindre (61) de l'unité piston-cylindre (62) étant relié avec possibilité de rotation à la fourche de pivotement (47) au moyen d'un élément de fixation (89), sur le côté tourné vers la tige de piston (63), la tige de piston (63) de l'unité piston-cylindre (62) étant reliée avec possibilité de rotation au dispositif de maintien (54).

11. Moissonneuse-batteuse (1) automotrice selon une des revendications 9 à 10, **caractérisée en ce que** l'actionneur (58) est réalisé sous forme d'unité piston-cylindre (62) hydraulique, l'unité piston-cylindre (62) hydraulique étant sollicitée avec de l'huile sous pression par l'intermédiaire d'une vanne de commande (79), l'unité de commande (83) électrique activant la vanne de commande (79).

12. Moissonneuse-batteuse (1) automotrice selon la revendication 11, **caractérisée en ce que** l'unité piston-cylindre (62) hydraulique forme, au moins dans une position extrême, un passage d'écoulement entre une première et une deuxième conduite hydraulique (77, 78).

13. Moissonneuse-batteuse (1) automotrice selon une des revendications 1 à 8, **caractérisée en ce que** l'actionneur (58) est réalisé sous forme de dispositif de réglage électrique, notamment de vérin hydraulique électrique.
